# EUROPEAN PATENT APPLICATION

(11) **EP 4 685 738 A1**
(43) Date of publication of application: **28.01.2026**
(21) Application number: 25186261.1
(22) Date of filing: 30.06.2025
(51) Int. Cl.: G06T 7/00, G02B 27/00

(54) **METHODS AND SYSTEMS FOR CLEANING A LENS AND/OR A PROTECTIVE DOME OF AN IMAGE CAPTURING DEVICE**

(30) Priority: 25.07.2024 IN 202411056589
(71) Applicant: Life Safety Distribution GmbH, 1180 Rolle (CH)
(72) Inventor: GEORGE, Renjith, Charlotte, 28202 (US); JOSEPH, Kingslin, Charlotte, 28202 (US); JOSEPH, Jeslin Paul, Charlotte, 28202 (US)
(74) Representative: Haseltine Lake Kempner LLP

(57) **Abstract**

A method and system are disclosed. The system comprises an image capturing device and at least one processor communicatively coupled to the image capturing device. The image capturing device is configured to capture one or more images. The at least one processor is configured to receive one or more images from the image capturing device. Further, the at least one processor is configured to analyze the received one or more images using AI/ML model. Further, the at least one processor is configured to determine a MTF value from each of the one or more images. Further, compare the determined MTF value with a predefined MTF value, and identify one or more defects on a lens and/or a protective dome of the image capturing device by analyzing the one or more images using the AI/ML model or by determining the determined MTF value is lower or higher by a predefined limit.

## Description

### TECHNOLOGICAL FIELD

Example embodiments of the present disclosure generally relates to surveillance technology, and more particularly relates to methods and systems for a cleaning lens of an image capturing device.

### BACKGROUND

Flame detectors are critical components in fire detection and prevention systems, commonly used in industrial settings, oil and gas facilities, and other environments where fire hazards are common. The flame detectors rely on cameras to detect the presence of flames and trigger appropriate safety responses. However, performance and reliability of the flame detectors can be significantly compromised by environmental factors. Accumulation of dust particles, snow, rain drops, and other scraps on the lens and/or the protective dome of the camera is a common issue. Accumulation of the dust particles, the snow, the rain drops, and the other debris on the lens and/or the protective dome can obscure the camera's view, leading to false alarms or, worse, failure to detect actual flames. In harsh and remote environments, these conditions are especially prevalent, making manual cleaning by operators a challenging and costly task. Regular maintenance and cleaning not only increase operational costs but also pose safety risks, as maintenance personnel may need to access hazardous areas.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a system is disclosed. The system comprises an image capturing device configured to capture one or more images. Further, the system comprises at least one processor communicatively coupled to the image capturing device. The at least one processor is configured to receive one or more images from the image capturing device. Further, the at least one processor is configured to analyze the received one or more images using an artificial intelligence (AI)/machine learning (ML) model. Further, the at least one processor is configured to determine a Modulation Transfer Function (MTF) value from each of the one or more images. Further, the at least one processor is configured to compare the determined MTF value with a predefined MTF value. Thereafter, the at least one processor is configured to identify one or more defects on a lens and/or a protective dome of the image capturing device by analyzing the one or more images using the AI/ML model or by determining the determined MTF value is lower or higher by a predefined limit than the predefined MTF value.

In some embodiments, the at least one processor is configured to generate a signal corresponding to an actuation of a wiper for cleaning the identified one or more defects. Further, the at least one processor is configured to send the generated signal to a wiper module coupled to the image capturing device. The wiper module is configured to actuate the wiper for cleaning the identified one or more defects on the lens and/or the protective dome.

In some embodiments, the at least one processor is configured to capture another one or more images from the image capturing device after cleaning the identified one or more defects on the lens and/or the protective dome, to determine a continued presence of the one or more defects on the lens and/or the protective dome.

In some embodiments, the at least one processor is further configured to generate an alert for a user upon determining the continued presence of the one or more defects on the lens and/or the protective dome of the image capturing device, based on the another one or more images captured.

In some embodiments, the alert comprises another one or more images captured by the image capturing device.

In some embodiments, the predefined MTF value corresponds to an MTF value determined from one or more images captured by the image capturing device during installation or deployment of the image capturing device.

In some embodiments, the predefined limit corresponds to a maximum tolerance limit of difference between the determined MTF value and the predefined MTF value.

In some embodiments, the predefined limit defines a range between 20-25%.

In some embodiments, the image capturing device is configured to capture the one or more images in a short focus range to determine the one or more defects on the lens and/or the protective dome using the AI/ML model.

In some embodiments, the image capturing device is configured to be deployed in one or more applications, the one or more applications comprising at least, flame detection, video surveillance and security, object detection, and facial recognition.

In another example embodiment, a method is disclosed. The method comprises steps of receiving, via at least one processor, one or more images from an image capturing device. The method further comprises analyzing, via the at least one processor, the received one or more images using an artificial intelligence (AI)/machine learning (ML) model. The method further comprises determining, via the at least one processor, a MTF value from each of the one or more images. The method further comprises comparing, via the at least one processor, the determined MTF value with a predefined MTF value. Thereafter, the method comprises identifying, via the at least one processor, one or more defects on lens and/or the protective dome of the image capturing device by analyzing the one or more images using the AI/ML model or by determining the determined MTF value is lower or higher by a predefined limit than the predefined MTF value.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a system for cleaning a lens and/or a protective dome of an image capturing device in accordance with an example embodiment of the present disclosure;
FIG. 2 illustrates a flow diagram showing a method for a short focus range test in accordance with a first example embodiment of the present disclosure;
FIG. 3 illustrates a flow diagram showing a method for cleaning the lens and/or the protective dome of the image capturing device using Modulation Transfer Function (MTF) in accordance with a second example embodiment of the present disclosure;
FIG. 4 illustrates a flow diagram showing a method for cleaning the lens and/or the protective dome of the image capturing device using the MTF in accordance with the second example embodiment of the present disclosure;
FIG. 5 illustrates one or more images showing one or more defects in the lens and/or the protective dome of the image capturing device in accordance with an example embodiment of the present disclosure;
FIG. 6 illustrates a flow diagram showing a method for cleaning the lens and/or the protective dome of the image capturing device using at least one sensor in accordance with a third example embodiment of the present disclosure; and
FIG. 7 illustrates a flowchart showing a method for cleaning the lens and/or the protective dome of the image capturing device in accordance with an example embodiment of the present disclosure.

### DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of methods and systems for cleaning a lens and/or a protective dome of an image capturing device. Embodiments may be configured to capture one or more images of an object. Further, embodiments may be configured to receive the one or more images from the image capturing device. Further, embodiments may be configured to analyze the received one or more images using an artificial intelligence (AI)/machine learning (ML) model. Embodiments may be further configured to determine an MTF value from each of the one or more images. Further, embodiments may be configured to compare the determined MTF value with a predefined MTF value. Further, embodiments may be configured to identify one or more defects on the lens and/or the protective dome of the image capturing device by analyzing the one or more images using the AI/ML model or by determining the determined MTF value may be lower or higher by a predefined limit than the predefined MTF value.

Further, embodiments may be configured to generate a signal corresponding to an actuation of a wiper for cleaning the identified one or more defects. Embodiments may be further configured to send the generated signal to a wiper module coupled to the image capturing device. Embodiments may be configured to actuate the wiper for cleaning the identified one or more defects on the lens and/or the protective dome. Embodiments may be further configured to capture another one or more images of the object using the image capturing device after cleaning the identified one or more defects on the lens and/or the protective dome to determine a continued presence of the one or more defects on the lens and/or the protective dome. Embodiments may be further configured to generate an alert for a user upon determining the continued presence of the one or more defects on the lens and/or the protective dome of the image capturing device, based on the another one or more images captured. Further, embodiments may be configured to capture the one or more images of the object in a short focus range to determine the one or more defects on the lens and/or the protective dome, using the AI/ML model. Further, embodiments may be configured to be deployed in one or more applications.

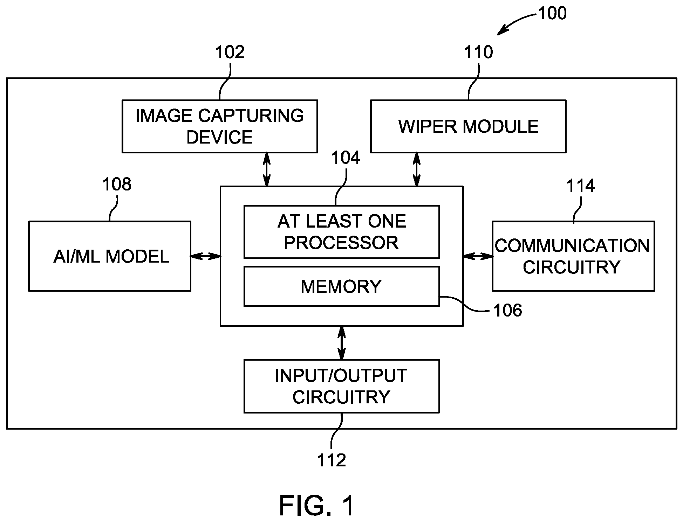

FIG. 1 illustrates a block diagram of a system 100 for cleaning lens and/or the protective dome of an image capturing device 102, in accordance with an example embodiment of the present disclosure. The system 100 may comprise an image capturing device 102, at least one processor 104, a memory 106, an Artificial Intelligence/Machine learning (AI/ML) model 108, a wiper module 110, an input/output circuitry 112, and a communication circuitry 114.

In some embodiments, the image capturing device 102 may be configured to capture one or more images of an object. The image capturing device 102 may be a security and safety unit designed for monitoring, analytics, and recording. The image capturing device 102 may correspond to a camera. In some embodiments, the image capturing device 102 may be installed in various types of buildings, including residential homes, commercial establishments, industrial facilities, workplaces, warehouses, power plants, and institutional buildings. The image capturing device 102 may further be installed in an open area, including parking lots, entry points, garages, driveways, back gardens of houses, approaches to houses, industrial sites, oil and gas facilities, and areas next to public walkways. The image capturing device 102 may be mounted on walls, ceilings, or poles, and the like, allowing for flexible placement of the image capturing device 102 to achieve optimal coverage of the field of view (FOV). In some embodiments, the image capturing device 102 may be placed in proximity of at least one flame detector (not shown). The applications of the image capturing device 102 may further include, for example, monitoring traffic, crime prevention, safety assessment, remote smoke and flame detection, environmental monitoring, mobile surveillance, flame detection, video surveillance and security, object detection, facial recognition, and security.

In some embodiments, the image capturing device 102 may be integrated into the at least one flame detector to identify fire hazards in remote locations, providing early warning and triggering safety measures. The image capturing device 102 may capture the one or more images of an object. The object may be present within the FOV. The object may comprise, for example, vehicles, individuals, entry/exit points, wildlife, machinery, workspaces, storage areas, and industrial facilities. In some embodiments, lens and/or the protective dome of the image capturing device 102 may be degraded due to one or more environmental factors. The degradation of the lens and/or the protective dome of the image capturing device 102 may impair the quality of the one or more images and may compromise performance of monitoring, analytics, and recording. The system 100 may ensure the lens and/or the protective dome of the image capturing device 102 remains clear and maintains integrity of the one or more images of the object captured using the image capturing device 102.

In some embodiments, the system 100 may further comprise at least one processor 104 and a memory 106. The at least one processor 104 may be communicatively coupled to the memory 106. In some embodiments, the at least one processor 104 may be configured to receive the one or more images from the image capturing device 102. The at least one processor 104 may be coupled to the image capturing device 102 deployed at one or more locations. The image capturing device 102 may capture the one or more images for monitoring, analytics, and recording. The image capturing device 102 may transmit the captured one or more images to the at least one processor 104 over a network. The transmission of the captured one or more images may be done using wired or wireless communication protocols.

In some embodiments, the network may be a communication network such as internet or a cloud network, that may be configured to allow the image capturing device 102 and the at least one processor 104 to communicate with each other through wired network, wireless network, or a combination of both. In some embodiments, the network may refer to as a distributed infrastructure that is configured to facilitate the exchange of data, information, and resources among interconnected computing devices and systems. The network may be designed to facilitate communication and collaboration across various locations, devices, and platforms. Those skilled in the art will recognize that wired devices may include, but are not limited to, wired networks such as Wide Area Networks (WANs) or Local Area Networks (LANs), while wireless devices may include wireless communications established via Radio Frequency (RF) signals or infrared signals. Various devices in the system 100 may connect to the network in accordance with various wired and wireless communication protocols such as Transmission Control Protocol and Internet Protocol (TCP/IP), User Datagram Protocol (UDP), and 2G, 3G, or 4G communication protocols.

In some embodiments, the at least one processor 104 may be configured to analyze the received one or more images using an artificial intelligence (AI)/machine learning (ML) model 108. The AI/ML model 108 may be trained to identify one or more defects on the lens and/or the protective dome of the image capturing device 102 by analyzing the received one or more images. In one embodiment, the image capturing device 102 may be configured to capture the one or more images of the object in a short focus range to determine the one or more defects on the lens and/or the protective dome using the AI/ML model 108. The one or more defects may comprise anything on the lens and/or the protective dome of the image capturing device 102 that may at least partly obscure the camera's ability to capture an image through the lens and/or the protective dome, including but not limited to dust, dirt, snow, water, bird droppings, stains, dark spots, cracks, etc.. In some embodiments, by analyzing the received one or more images, the AI/ML model 108 may recognize patterns and anomalies that may indicate the presence of the one or more defects. The analysis of the received one or more images using the AI/ML model 108 may involve one or more steps. In some embodiments, the AI/ML model 108 may be operationally coupled to the at least one processor 104. The one or more steps may include image preprocessing, feature extraction, and defect classification.

In some embodiments, the image preprocessing may involve noise reduction, normalization, and enhancement techniques to improve the quality of the received one or more images. In some embodiments, feature extraction may identify critical attributes or patterns within the preprocessed one or more images that may be relevant to detection of the one or more defects. Further, the extracted features may be used by the AI/ML model 108 to classify image regions and determine whether the image regions may contain the one or more defects.

In one example, the AI/ML model 108 may correspond to natural language processing (NLP), clustering or unsupervised learning, reinforcement learning (RL) or any other AI/ML model 108 known in the art. For instance, the NLP may enable the at least one processor 104 to identify the one or more defects in the lens and/or the protective dome of the image capturing device 102. Additionally, clustering or unsupervised learning may be employed to analyze the one or more images captured by the image capturing device 102. Further, capturing the one or more images for a short focus range, to facilitate identification of recurring issues or the anomalies. The AI/ML model 108 may enable the at least one processor 104 to autonomously learn, adapt, and improve the configuration and enrollment process, to provide actionable insights and support proactive maintenance efforts.

In some embodiments, the at least one processor 104 may be configured to determine a modulation transfer function (MTF) value from each of the one or more images. Once the analysis of the received one or more images may be complete, the at least one processor 104 may determine the MTF value from each of the one or more images. The MTF value may correspond to a critical metric used to evaluate performance of the image capturing device 102 based at least on the one or more images captured by the image capturing device 102. In various embodiments, the MTF value is a measurement of the ability of a lens and/or the protective dome to transfer contrast at a particular resolution from the object to the image. MTF is a way to incorporate resolution and contrast into a single specification.

In some embodiments, the at least one processor 104 may be configured to compare the determined MTF value with a predefined MTF value. The predefined MTF value may correspond to the MTF value determined from one or more images captured by the image capturing device during installation or deployment of the image capturing device. Further, the predefined limit may correspond to a maximum tolerance limit of difference between the determined MTF value and the predefined MTF value. The predefined limit may define a range between 20-25%. In some embodiments, by comparing the determined MTF value with the predefined MTF value, the at least one processor 104 may assess quality of the lens and/or the protective dome of the image capturing device 102 and may identify any deviation that may indicate the presence of one or more defects.

In some embodiments, the predefined MTF value may be established during the initial installation or deployment phase of the image capturing device 102. During the installation or deployment phase, one or more images may be captured, and the corresponding MTF values may be calculated. The MTF values corresponding to the one or more images captured during the installation or the deployment phase may correspond to the predefined MTF value. The predefined MTF value may be considered optimal and may serve as the standard against which the determined MTF value of one or more images may be compared.

In some embodiments, the at least one processor 104 may be configured to identify the one or more defects on lens and/or the protective dome of the image capturing device 102 by analyzing the one or more images using the AI/ML model 108 or by determining that the determined MTF value is lower or higher by the predefined limit than the predefined MTF value. The one or more defects may be identified by analyzing the received one or more images. The at least one processor 104 may store the analyzed one or more images in a database for identifying the one or more defects. The at least one processor 104 may store the analyzed one or more images in a local or a cloud-based storage. The identified one or more defects may degrade the quality of the one or more images.

In some embodiments, the at least one processor 104 may be configured to generate a signal corresponding to an actuation of a wiper for cleaning the identified one or more defects. The at least one processor 104 may generate the signal corresponding to the actuation of the wiper upon identifying the one or more defects. Further, the at least one processor 104 may be configured to send the generated signal to a wiper module 110 coupled to the image capturing device 102. The wiper module 110 may be configured to actuate the wiper for cleaning the identified one or more defects on the lens and/or the protective dome. The signal may correspond to an electronic command that may instruct the wiper module 110 to activate. The transmission of this signal may occur through a wired or a wireless connection, ensuring prompt communication between the at least one processor 104 and the wiper module 110.

In some embodiments, the at least one processor 104 may be configured to actuate the wiper based on the identification to clean the lens and/or the protective dome of the image capturing device 102, if the one or more defects are identified. The wiper may clean the lens and/or the protective dome of the image capturing device 102. In some embodiments, the wiper may remove the identified one or more defects. Further, the wiper may be placed on an exterior surface of the lens and/or the protective dome of the image capturing device 102.

In some embodiments, the wiper module 110 may correspond to an integral component of the image capturing device 102. The wiper module 110 may clean the one or more defects on the lens and/or the protective dome of the image capturing device 102. The wiper module 110 may maintain the clarity of the lens and/or the protective dome of the image capturing device 102. In one example, the wiper module 110 may comprise at least, a wiper blade, a motor to drive the wiper blade, and a control circuitry that may interface with the at least one processor 104. The wiper module 110 may be positioned within a dome or a housing of the image capturing device 102. The wiper module 110 may cover an entire surface of the lens and/or the protective dome effectively for cleaning the one or more defects. In some embodiments, once the at least one processor 104 may detect the presence of the one or more defects, the at least one processor 104 may send a signal to the wiper module 110 to activate. The motor may move the wiper blade across the lens and/or the protective dome, cleaning the one or more defects of the lens and/or the protective dome and restoring the clarity of the one or more captured images.

In some embodiments, the at least one processor 104 may be configured to capture another one or more images of the object using the image capturing device 102 after cleaning the identified one or more defects on the lens and/or the protective dome to determine a continued presence of the one or more defects on the lens and/or the protective dome. The identified one or more defects may be cleaned by activating the wiper module 110. The captured another one or more images may be analyzed for identifying the one or more defects. In some embodiments, the at least one processor 104 may compare the captured one or more images against a pre-cleaned one or more images to identify the remaining one or more defects. Further, the image capturing device 102 may come out of diagnostic mode if the image capturing device 102 may be cleaned. In some embodiments, coming out of the diagnostic mode may signify that the image capturing device 102 may resume the operational functions. Further, coming out of the diagnostic mode may ensure uninterrupted monitoring and capturing the one or more images.

In some embodiments, the at least one processor 104 may be further configured to generate an alert for a user upon determining the continued presence of the one or more defects on the lens and/or the protective dome of the image capturing device 102 based on the another one or more images captured. The user may acknowledge the alert and schedule maintenance activity of the image capturing device 102. The alert may correspond to a notification that the cleaning process of the lens and/or the protective dome of the image capturing device 102 may fail to clean the lens and/or the protective dome of the image capturing device 102. In some embodiments, after acknowledging the alert, the user may schedule the maintenance activity for the image capturing device 102. The scheduling may be done through a maintenance management system integrated with the at least one processor 104 or coordinating with technical staff to physically inspect and clean the lens and/or the protective dome of image capturing device 102. The scheduled maintenance activity may manually clean the one or more defects that the system 100 may not resolve, thereby restoring the image capturing device 102 to the optimal operational condition.

The at least one processor 104 may include suitable logic, circuitry, and/or interfaces that are operable to execute one or more instructions stored in the memory 106 to perform predetermined operations. In some embodiments, the at least one processor 104 may be configured to store the one or more images, a depth value of the captured one or more images, the identified one or more defects, and the alert in the memory 106 communicatively coupled to the at least one processor 104. In one embodiment, the at least one processor 104 may be configured to decode and execute any instructions received from one or more other electronic devices or server(s). The at least one processor 104 may be configured to execute one or more computer-readable program instructions, such as program instructions to carry out any of the functions described in this description. Further, the processor may be implemented using the at least one processor 104 technologies known in the art. Examples of the at least one processor 104 include, but are not limited to, one or more general purpose processors (e.g., INTEL^{®} or Advanced Micro Devices^{®} (AMD) microprocessors) and/or one or more special purpose processors (e.g., digital signal processors or Xilinx^{®} System On Chip (SOC) Field Programmable Gate Array (FPGA) processor).

In some embodiments, the memory 106 may be configured to store a set of instructions and data executed by the at least one processor 104. Further, the memory 106 may include the one or more instructions that are executable by the at least one processor 104 to perform specific operations. The memory 106 may be configured to store the captured one or more images. The memory 106 may be configured to include the instructions to actuate the wiper to clean the lens and/or the protective dome of the image capturing device 102. The memory 106 may be configured to include the instructions to store the predefined MTF value. Further, the memory 106 may be configured to include the instructions to generate an alert to the user if the lens and/or the protective dome of the image capturing device 102 may not be cleaned.

It is apparent to a person with ordinary skill in the art that the one or more instructions stored in the memory 106 enable the hardware of the system 100 to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

In some embodiments, the system 100 may further comprise an input/output circuitry 112. The input/output circuitry 112 may enable a user to communicate or interface with the system 100, via a user device. The user device may include N number of user devices. In some embodiments, the input/output circuitry 112 may act as a medium to transmit input from the interface to and from the system 100. In some embodiments, the input/output circuitry 112 may refer to the hardware and software components that facilitate the exchange of information between the user device and the system 100. In one example, the system 100 may include a graphical user interface (GUI) (not shown) as input circuitry to allow the users to input data. The input/output circuitry 112 may include various input devices such as keyboards, barcode scanners, GUI for the users to provide data and various output devices such as displays, printers for the one or more users to receive data. In another example, the input/output circuitry 112 may include various output circuitry such as a display. In one example, the input/output circuitry 112 may interface with the image capturing device 102 to receive the alert. The input/output circuitry 112 may further display relevant information to the user on the user device.

In some embodiments, the system 100 may further comprise a communication circuitry 114. The communication circuitry 114 may allow the system 100 to exchange data or information with other systems or apparatuses. Further, the communication circuitry 114 may include network interfaces, protocols, and software modules responsible for sending and receiving data or information. In some embodiments, the communication circuitry 114 may include Ethernet ports, Wi-Fi adapters, or communication protocols like HTTP or MQTT for connecting with other systems. The communication circuitry 114 may further include components such as communication modules (e.g., Wi-Fi, Ethernet, cellular), transceivers, antennas, and protocols (e.g., TCP/IP, MQTT, SNMP) for exchanging data with other systems or network devices. The communication circuitry 114 may allow the system 100 to stay up-to-date. In some embodiments, the communication circuitry 114 may enable seamless communication between the user device and the image capturing device 102. The communication circuitry 114 may further ensure the one or more images, and the alert may transmit securely and efficiently between the user device, and the image capturing device 102.

It will be apparent to one skilled in the art the above-mentioned components of the system 100 have been provided only for illustration purposes, without departing from the scope of the disclosure.

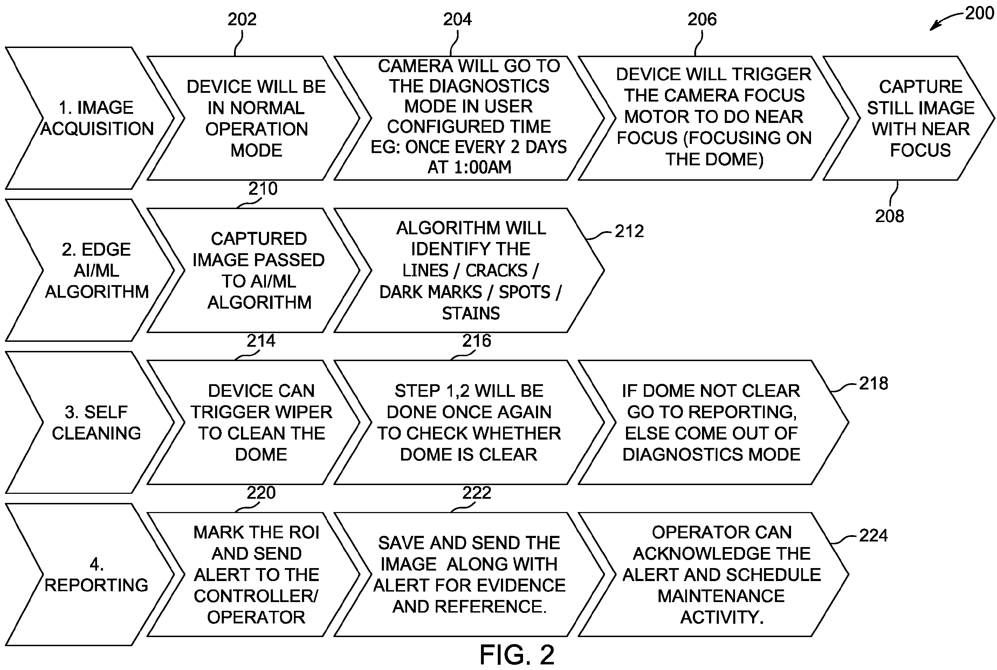

FIG. 2 illustrates a flow diagram showing a method 200 for short focus range test, in accordance with a first example embodiment of the present disclosure.

At operation 202, the image capturing device 102 may be in normal operation mode. The image capturing device 102 may operate under normal conditions, continuously monitoring and capturing the one or more images for designated purpose. The designated purpose may correspond to surveillance, traffic monitoring, or environmental analysis. At operation 204, the image capturing device 102 may go to a diagnostic mode in a user configured time. The image capturing device 102 may transit from the normal operation mode to the diagnostic mode when triggered, either periodically or based on certain conditions. The diagnostic mode may check integrity and cleanliness of the image capturing device's 102 lens and/or the protective dome to ensure optimal image quality. In one example, the diagnostic mode may be activated every 2 days at 1:00AM.

At operation 206, the at least one processor 104 may trigger focus motor of the image capturing device 102 to do near focus. The image capturing device 102 may focus the lens and/or the protective dome. In one example, the image capturing device 102 may focus at a dome that is used for covering the at least one image capturing device 102. The image capturing device 102 may activate the image capturing device 102 focus motor to adjust lens and/or the protective dome for the near focus, targeting the lens and/or the protective dome of the image capturing device 102. In some embodiments, by focusing closely on the lens and/or the protective dome, the system 100 may prepare to capture the one or more images of the lens's and/or the protective dome's surface to identify the one or more defects. At operation 208, the image capturing device 102 may capture the one or more images with the near focus. The one or more images may provide a clear view of the lens's and/or the protective dome's surface, highlighting the one or more defects.

At operation 210, the captured image may be transmitted to an AI/ML model 108. The at least one processor 104 may process the one or more images and may detect the one or more defects that may affect the image capturing device 102 performance using the AI/ML model 108. At operation 212, the AI/ML model 108 may identify the one or more defects on the lens and/or the protective dome of the at least one image capturing device 102.

At operation 214, the at least one processor 104 may be configured to trigger the wiper module 110 to clean the lens and/or the protective dome of the image capturing device 102. In some embodiments, if the one or more defects may be identified, the at least one processor104 may actuate the wiper module 110 to clean the lens and/or the protective dome of the image capturing device 102. At operation 216, the at least one processor 104 may determine whether the lens and/or the protective dome of the image capturing device 102 may be clean. In some embodiments, after cleaning the lens and/or the protective dome, the image capturing device 102 may return to the normal operation mode or may re-enter the diagnostic mode. Further, the image capturing device 102 may focus the lens and/or the protective dome and may capture the one or more images with the near focus. Further, the captured one or more images may be transmitted to the AI/ML model 108. The AI/ML model 108 may identify the one or more defects in the lens and/or the protective dome of the image capturing device 102. At operation 218, if the lens and/or the protective dome may not be clear, then the at least one processor 104 may be configured to generate the alert. If the lens and/or the protective dome may be clear, then the at least one processor 104 may be configured to direct the at least one image capturing device 102 to come out of the diagnostic mode or may exit the diagnostic mode.

At operation 220, the at least one processor 104 may mark a region of interest (ROI) and may send the alert to the user. The user may correspond to an operator or a controller. In some embodiments, if the lens and/or the protective dome of the image capturing device 102 may have the continued presence of the one or more defects on the lens and/or the protective dome, the at least one processor 104 may mark the ROI where the one or more defects may persist and may send the alert to the user. The alert may include detailed information about the one or more defects, allowing the user to take appropriate action. At operation 222, the at least one processor 104 may save and send the one or more images along with the alert to the user for evidence and reference. At operation 224, the user may acknowledge the alert and may schedule maintenance activity. The user may acknowledge receipt of the alert and may schedule necessary maintenance activities to manually address the one or more defects present in the lens and/or the protective dome.

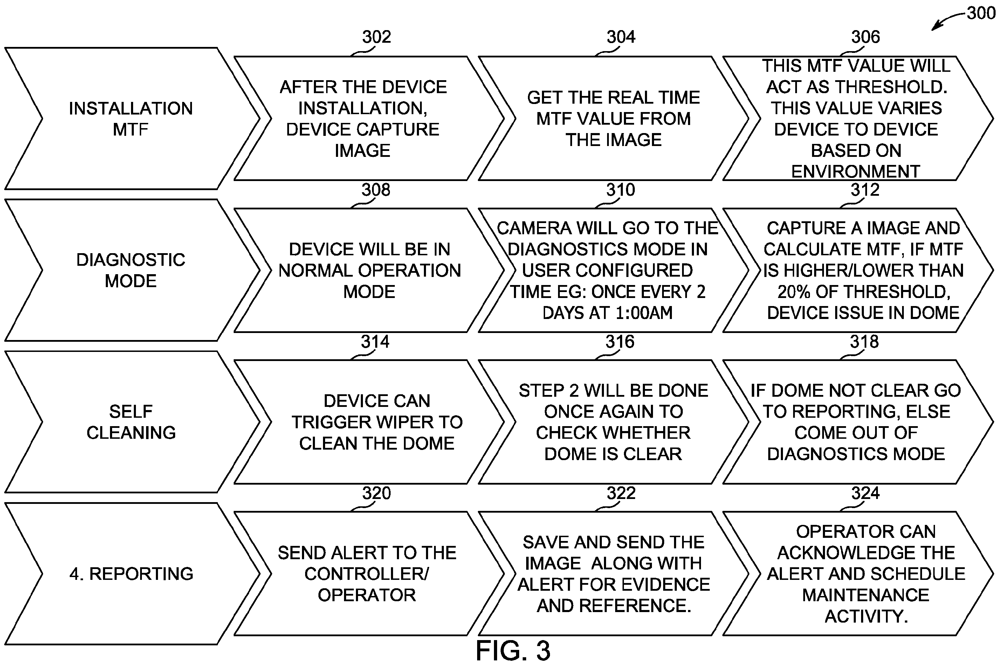

FIG. 3 illustrates a flow diagram showing a method 300 for cleaning the lens and/or the protective dome of the image capturing device 102 using the MTF value, in accordance with a second example embodiment of the present disclosure.

At operation 302, the image capturing device 102 may capture the one or more images after installing the image capturing device 102. The one or more images may correspond to a reference point for the diagnostics. The system 100 may use the image capturing device 102 to capture one or more high-quality images under optimal conditions, assuming the lens and/or the protective dome may be clean and free of the one or more defects. At operation 304, the at least one processor 104 may calculate a real-time MTF value from the captured one or more images. The calculation may provide a baseline value for the system 100. The baseline may indicate optimal performance of the image capturing device 102 with a clean lens and/or the protective dome. At operation 306, the real-time MTF value obtained from the one or more images may be set as the predefined MTF value for the comparisons.

At operation 308, the image capturing device 102 may be in the normal operation mode. The image capturing device 102 may operate under the normal conditions, continuously monitoring and capturing the one or more images for the designated purpose. The designated purpose may correspond to surveillance, traffic monitoring, or environmental analysis. At operation 310, the image capturing device 102 may go the diagnostic mode in the user configured time. In one example, the diagnostic mode may be activated once every 2 days at 1:00AM. The image capturing device 102 may transit from the normal operation to the diagnostics mode. The scheduled diagnostics mode may check the lens's and/or the protective dome's integrity by capturing depth value. At operation 312, in the diagnostics mode, the image capturing device 102 may capture the one or more images and may calculate the MTF value for the captured one or more images. The system 100 may measure the quality of the captured one or more images and may compare the calculated MTF value to the predefined MTF value. In some embodiments, if the MTF value may deviate by more than 20% from the predefined MTF value, the deviated MTF value may indicate the one or more defects in the lens and/or the protective dome.

At operation 314, the at least one processor 104 may send a signal to the wiper module 110 to actuate the wiper to clean the lens and/or the protective dome of the image capturing device 102. In some embodiments, if the one or more defects may be identified, the at least one processor 104 may generate the signal corresponding to the actuation of the wiper for cleaning the identified one or more defects. At operation 316, the system 100 may capture the one or more images, and may further calculate the MTF value. At operation 318, if the lens and/or the protective dome may not be clear, the at least one processor 104 may be configured to generate the alert. If the lens and/or the protective dome may be clear, the at least one processor 104 may be configured to direct the at least one image capturing device 102 to come out of the diagnostic mode or may exit the diagnostic mode.

At operation 320, the at least one processor 104 may mark the region of interest (ROI) and may send the alert to the user. The user may correspond to an operator or a controller. In some embodiments, if the lens and/or the protective dome may have the continued presence of the one or more defects on the lens and/or the protective dome the at least one processor 104 may mark the ROI where the one or more defects may persist and may send the alert to the user. The alert may include detailed information about the one or more defects, allowing the user to take appropriate action. At operation 322, the at least one processor 104 may save and send the one or more images along with the alert to the user. At operation 324, the user may acknowledge the alert and may schedule maintenance activity. The user may acknowledge receipt of the alert and may schedule necessary maintenance activities to manually address the one or more defects present in the lens and/or the protective dome of the image capturing device 102.

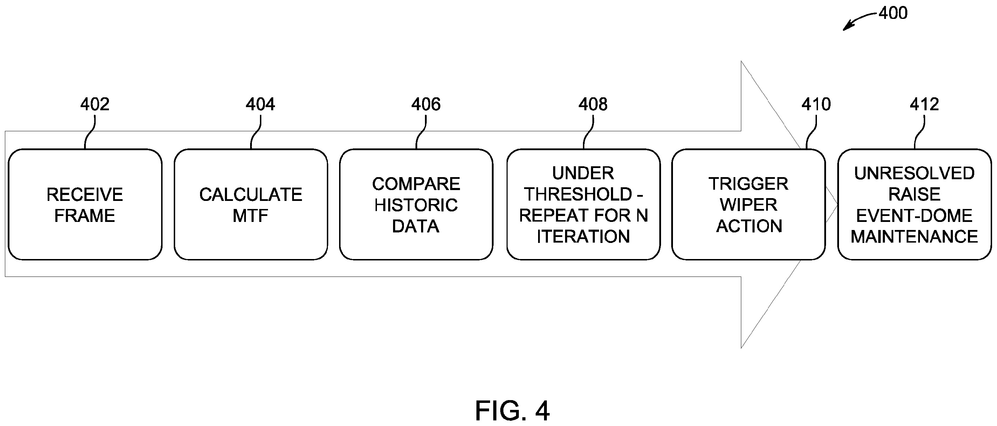

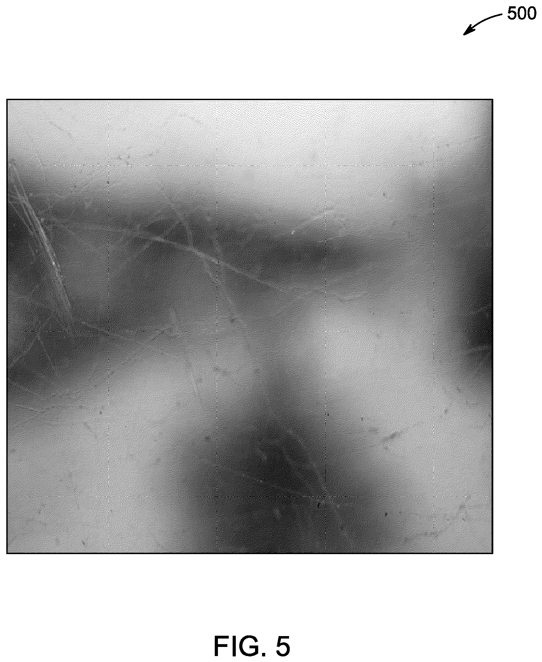

FIG. 4 illustrates a flow diagram showing a method 400 for cleaning the lens and/or the protective dome of the image capturing device 102 using the Modulation Transfer Function (MTF) value, in accordance with the second example embodiment of the present disclosure. FIG. 5 illustrates one or more images 500 showing one or more defects in the lens and/or the protective dome of the image capturing device 102, in accordance with an example embodiment of the present disclosure.

At operation 402, the at least one processor 104 may receive a frame from the image capturing device 102. In some embodiments, receiving the frame may involve capturing the one or more still images from the image capturing device 102. The captured one or more still images may be analyzed to assess the clarity and integrity of the lens and/or the protective dome of the image capturing device 102. The captured one or more images may be processed to check for the one or more defects. At operation 404, the at least one processor 104 may calculate the MTF value from the one or more captured images. The MTF value may be a measure of the quality of the one or more images. The MTF value may be a measure how well the image capturing device 102 may reproduce detail from an object to the one or more images. The MTF value may evaluate sharpness and contrast of the captured one or more images. A higher MTF value may indicate a clear and sharp one or more images. A lower MTF value may indicate degradation or blurring, due to the one or more defects of the lens and/or the protective dome of the image capturing device 102.

At operation 406, the current MTF value may be compared against the predefined MTF value. The memory 106 may maintain a record of the predefined MTF values from previous frames. The comparison may help in identifying trends or sudden drops in high-quality the one or more images. By comparing the current MTF value with the predefined MTF value, the at least one processor 104 may determine if there may be degradation in high-quality the one or more images. At operation 408, if the current MTF value may be lower or higher by a predefined limit than the predefined MTF value, the at least one processor 104 may repeat the process for N iterations to confirm the presence of the one or more defects. In some embodiments, to avoid false positives, the at least one processor 104 may re-evaluate the MTF value for a specified number of iterations (N).

At operation 410, if the MTF value remain lower or higher by a predefined limit than the predefined MTF value after the N iterations, then the at least one processor 104 may actuate the wiper to clean the identified one or more defects of the lens and/or the protective dome. The wiper may remove the one or more defects that may be cause degradation in the one or more images quality. The cleaning may be intended to restore the lens's and/or the protective dome's clarity and improve the MTF value.

In some embodiments, FIG. 5 may showcase the one or more images 500 showing the one or more defects that may impair the lens's and/or the protective dome's clarity and, consequently, the image capturing device's 102 performance. Further, FIG. 5 may provide a representation of how the one or more defects may affect the quality of the one or more images 500 captured by the image capturing device 102.

At operation 412, if there may be the continued presence of the one or more defects on the lens and/or the protective dome, then the at least one processor 104 may raise an event for the maintenance of the lens and/or the protective dome. If the MTF value may not improve and may remain lower or higher by a predefined limit than the predefined MTF value even after cleaning the one or more defects on the lens and/or the protective dome, the at least one processor 104 may flag the lens and/or the protective dome for manual inspection and maintenance. The alert may be generated and sent to the user, indicating that the lens and/or the protective dome may require maintenance. The alert may include the details of the one or more defects.

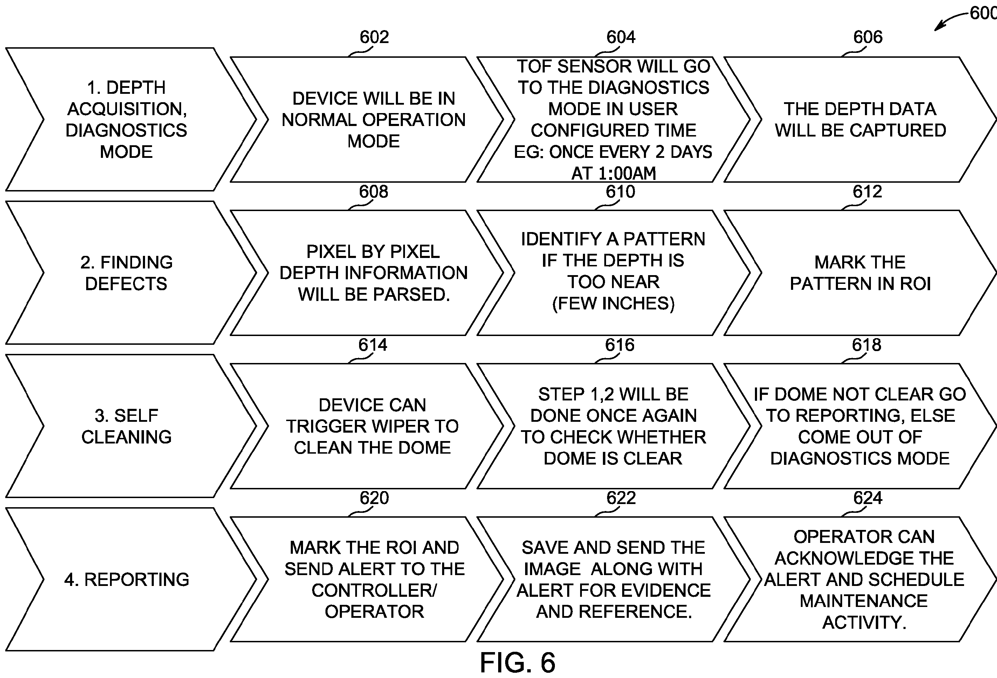

FIG. 6 illustrates a flow diagram showing a method 600 for cleaning the lens and/or the protective dome of the image capturing device 102 using at least one sensor, in accordance with a second example embodiment of the present disclosure.

At operation 602, the image capturing device 102 may be in the normal operation mode. The image capturing device 102 may operate under the normal conditions, continuously monitoring and capturing the one or more images for the designated purpose. The designated purpose may correspond to surveillance, traffic monitoring, or environmental analysis. The system 100 may include the image capturing device 102 and the at least one sensor, that may operate under the normal conditions, performing the functions that may include monitoring, capturing the one or more images, and analyzing the captured one or more images. The at least one sensor may correspond to a Time-of-Flight (TOF) sensor.

At operation 604, the at least one sensor may go the diagnostic mode in the user configured time. In one example, the diagnostic mode may be activated once every 2 days at 1:00AM. The at least one sensor may transit from the normal operation to the diagnostics mode. The scheduled diagnostics mode may check the lens's and/or the protective dome's integrity by capturing depth value. At operation 606, the at least one sensor may capture depth value. The at least one sensor may measure distance between the at least one sensor and one or more points on the lens and/or the protective dome. The at least one sensor may generate a detailed depth map.

At operation 608, the captured depth value may be processed pixel by pixel to analyze the distance information. Each pixel's depth value may be parsed to create a detailed depth map of the lens's and/or the protective dome's surface. The detailed depth map may identify the one or more defects. At operation 610, the at least one processor 104 may identify patterns where the depth value may be too close to the at least one sensor. The depth value that may be significantly closer than the expected distance may suggest the presence of the one or more defects. At operation 612, the at least one processor 104 may mark the pattern in the ROI. The at least one processor 104 may mark the identified patterns in the ROI on the detailed depth map. Marking the identified patterns in the ROI may highlight the areas with the one or more defects.

At operation 614, the at least one processor 104 may trigger the wiper module 110 to clean the lens and/or the protective dome of the image capturing device 102. In some embodiments, if the one or more defects may be identified, the at least one processor 104 may actuate the wiper to clean the one or more defects on the lens and/or the protective dome. At operation 616, the at least one processor 104 may determine whether the lens and/or the protective dome of the image capturing device 102 may be clean. In some embodiments, after cleaning the lens and/or the protective dome, the image capturing device 102 may return to the normal operation mode and may re-enter the diagnostic mode. Further, the at least one sensor may capture the depth value. Further, the captured depth value may be processed pixel by pixel to analyze the distance information. Further, the at least one processor 104 may identify the pattern, and mark the pattern in the ROI. At operation 618, if the lens and/or the protective dome is not clear, then the at least one processor 104 may be configured to generate the alert. If the lens and/or the protective dome may be clear, the at least one processor 104 may be configured to direct the at least one image capturing device 102 to come out of the diagnostic mode or may exit the diagnostic mode.

At operation 620, the at least one processor 104 may mark a region of interest (ROI) and may send an alert to the user. The user may correspond to an operator or a controller. If the lens and/or the protective dome may have the continued presence of the one or more defects on the lens and/or the protective dome, the at least one processor 104 may mark the ROI where the one or more defects may persist and may send the alert to the user. The alert may include detailed information about the one or more defects, allowing the user to take appropriate action. At operation 622, the at least one processor 104 may save and send the one or more images along with the alert to the user for evidence and reference. At operation 624, the user may acknowledge the alert and may schedule maintenance activity. The user may acknowledge receipt of the alert and may schedule necessary maintenance activities to manually address the one or more defects present in the lens and/or the protective dome.

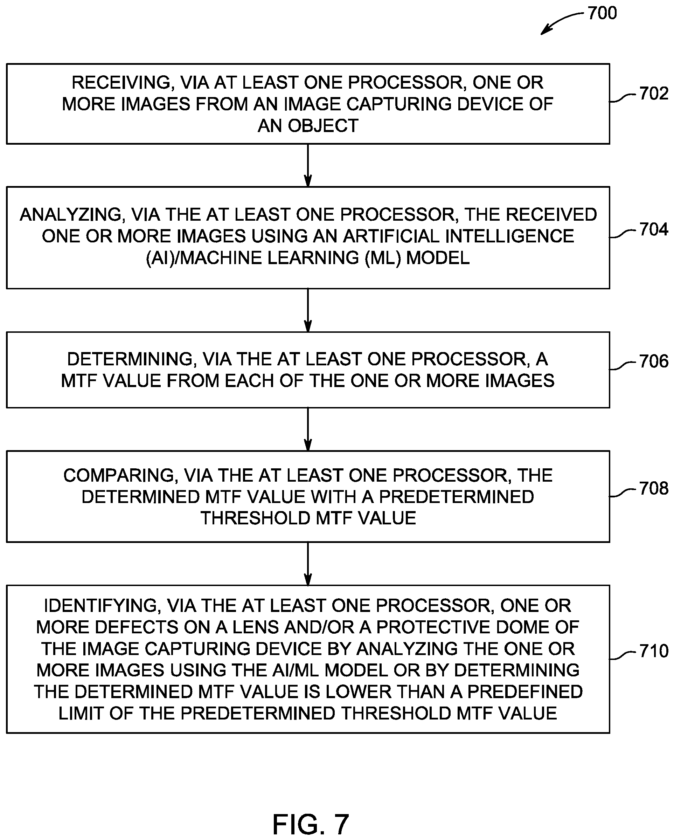

FIG. 7 illustrates a flowchart showing a method 700 for cleaning the lens and/or the protective dome of the image capturing device 102, in accordance with an example embodiment of the present disclosure.

At operation 702, the at least one processor 104 may be configured to receive the one or more images from the image capturing device 102. The at least one processor 104 may be coupled to the image capturing device 102 deployed at one or more locations. The image capturing device 102 may capture the one or more images for monitoring, analytics, and recording. The image capturing device 102 may transmit the captured one or more images to the at least one processor 104 over a network. The transmission of the captured one or more images may be done using wired or wireless communication protocols. The wired communication protocols may comprise, but is not limited to, Ethernet, RS-232, RS-485, and HD-SDI. Further, the wireless communication protocols may comprise, but is not limited to, Wi-Fi, Cellular, ZigBee, and Bluetooth.

At operation 704, the at least one processor 104 may be configured to analyze the received one or more images using an artificial intelligence (AI)/machine learning (ML) model 108. The AI/ML model 108 may be trained to identify one or more defects on the lens and/or the protective dome of the image capturing device 102 by analyzing the received one or more images. The image capturing device 102 may be configured to capture the one or more images of the object in a short focus range to determine the one or more defects on the lens and/or the protective dome using the AI/ML model 108. In some embodiments, by analyzing the received one or more images, the AI/ML model 108 may recognize patterns and anomalies that may indicate the presence of the one or more defects. The analysis of the received one or more images using the AI/ML model 108 may involve one or more steps. In some embodiments, the AI/ML model 108 may be operationally coupled to the at least one processor 104. The one or more steps may include image preprocessing, feature extraction, and defect classification.

At operation 706, the at least one processor 104 may be configured to determine a modulation transfer function (MTF) value from each of the one or more images. Once the analysis of the received one or more images may be complete, the at least one processor 104 may determine the MTF value from each of the one or more images. The MTF value may correspond to a critical metric used to evaluate performance of the image capturing device 102 based at least on the one or more images captured by the image capturing device 102.

At operation 708, the at least one processor 104 may be configured to compare the determined MTF value with a predefined MTF value. The predefined MTF value may correspond to the MTF value determined from one or more images captured by the image capturing device during installation or deployment of the image capturing device. Further, the predefined limit may correspond to a maximum tolerance limit of difference between the determined MTF value and the predefined MTF value. The predefined limit may define a range between 20-25%.

At operation 710, the at least one processor 104 may be configured to identify the one or more defects on lens and/or the protective dome of the image capturing device 102 by analyzing the one or more images using the AI/ML model 108 or by determining the determined MTF value may be lower or higher by the predefined limit than the predefined MTF value. The one or more defects may be identified by analyzing the received one or more images. The at least one processor 104 may store the analyzed one or more images in a database for identifying the one or more defects. The at least one processor 104 may store the analyzed one or more images in a local or a cloud-based storage. The identified one or more defects may degrade the one or more images quality.

In one embodiment, the present invention may be a progressive web app (PWA). The PWA may be an app that's built using web platform technologies, but that provides a user experience like that of a platform-specific app. The PWA may be installed on a device. The PWA may operate while offline and in the background. The PWA may integrate with the device. The PWA may further integrate with other applications installed on the device. In an embodiment, the present invention may provide a good user experience even when the device has intermittent network connectivity. Further, the present invention may perform operations in the background, even when the main app is not running.

The present disclosure presents several advantages in enhancing the functionality and reliability of the image capturing device 102. In some embodiments, one of the primary benefits of the present disclosure may be the automated self-cleaning capability of the image capturing device, which may minimize the need for manual maintenance and may ensure consistent image quality. In some embodiments, by integrating image analysis algorithms and the wiper module 110, the system 100 may detect and clean the one or more defects, preventing the one or more images degradation. The present disclosure may not only reduce maintenance costs and downtime but may also improve the accuracy of the image analytics. Further, the system's ability to send the alert and provide detailed reports to the operator may ensure timely intervention when manual maintenance may be necessary.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system comprising:
an image capturing device configured to capture one or more images;
at least one processor communicatively coupled to the image capturing device, wherein the at least one processor is configured to:
receive one or more images from the image capturing device;
analyze the received one or more images using an artificial intelligence (AI)/machine learning (ML) model;
determine a modulation transfer function (MTF) value from each of the one or more images;
compare the determined MTF value with a predefined MTF value; and
identify one or more defects on a lens and/or a protective dome of the image capturing device by analyzing the one or more images using the AI/ML model or by determining the determined MTF value is lower or higher by a predefined limit than the predefined MTF value.

2. The system of claim 1, wherein the at least one processor is further configured to:
generate a signal corresponding to an actuation of a wiper for cleaning the identified one or more defects; and
send the generated signal to a wiper module coupled to the image capturing device, wherein the wiper module is configured to actuate the wiper for cleaning the identified one or more defects on the lens and/or the protective dome.

3. The system of claim 2, wherein the at least one processor is further configured to capture another one or more images using the image capturing device after cleaning the identified one or more defects on the lens and/or the protective dome to determine a continued presence of the one or more defects on the lens and/or the protective dome.

4. The system of claim 3, wherein the at least one processor is further configured to generate an alert for a user upon determining the continued presence of the one or more defects on the lens and/or the protective dome of the image capturing device based on the another one or more images captured.

5. The system of claim 4, wherein the alert comprises another one or more images captured by the image capturing device.

6. The system of claim 1, wherein the predefined MTF value corresponds to an MTF value determined from one or more images captured by the image capturing device during installation or deployment of the image capturing device.

7. The system of claim 1, wherein the predefined limit corresponds to a maximum tolerance limit of difference between the determined MTF value and the predefined MTF value.

8. The system of claim 1, wherein the image capturing device is configured to capture the one or more images in a short focus range to determine the one or more defects on the lens and/or the protective dome using the AI/ML model.

9. A method comprising:
receiving, via at least one processor, one or more images, from an image capturing device;
analyzing, via the at least one processor, the received one or more images using an artificial intelligence (AI)/machine learning (ML) model;
determining, via the at least one processor, a modulation transfer function (MTF) value from each of the one or more images;
comparing, via the at least one processor, the determined MTF value with a predefined MTF value; and
identifying, via the at least one processor, one or more defects on a lens and/or a protective dome of the image capturing device by analyzing the one or more images using the AI/ML model or by determining the determined MTF value is lower or higher by a predefined limit than the predefined MTF value.

10. The method of claim 9 further comprising:
generating, via the at least one processor, a signal corresponding to an actuation of a wiper for cleaning the identified one or more defects; and
sending, via the at least one processor, the generated signal to a wiper module coupled to the image capturing device, wherein the wiper module is configured to actuate the wiper for cleaning the identified one or more defects on the lens and/or the protective dome.

11. The method of claim 10 further comprising:
capturing, via the image capturing device communicatively coupled to the at least one processor, another one or more images after cleaning the identified one or more defects on the lens and/or the protective dome, to determine a continued presence of the one or more defects on the lens and/or the protective dome.

12. The method of claim 11 further comprising generating, via the at least one processor, an alert for a user upon determining the continued presence of the one or more defects on the lens and/or the protective dome of the image capturing device, based on the another one or more images captured.

13. The method of claim 9, wherein the predefined MTF value corresponds to an MTF value determined from one or more images captured by the image capturing device during installation or deployment of the image capturing device.

14. The method of claim 9, wherein the predefined limit corresponds to a maximum tolerance limit of difference between the determined MTF value and the predefined MTF value.

15. The method of claim 9, wherein the image capturing device is configured to capture the one or more images in a short focus range to determine the one or more defects on the lens and/or the protective dome, using the AI/ML model.
